# EUROPEAN PATENT SPECIFICATION

(11) **EP 2 400 127 B1**
(45) Date of publication and mention of the grant of the patent: **04.11.2015**
(21) Application number: 10743661.0
(22) Date of filing: 08.02.2010
(51) Int. Cl.: F02B 39/00, F02B 37/02, F01D 17/18, F02B 37/22

(54) **TURBO SUPERCHARGER**
TURBOSUPERLADER
TURBOCOMPRESSEUR

(30) Priority: 18.02.2009 JP 2009035541; 21.12.2009 JP 2009289810
(43) Date of publication of application: 28.12.2011
(73) Proprietor: Mitsubishi Heavy Industries, Ltd., Tokyo 108-8215 (JP)
(72) Inventor: SHIRAISHI, Keiichi, Tokyo 108-8215 (JP)
(74) Representative: Henkel, Breuer & Partner
(86) International application number: PCT/JP2010/051826
(87) International publication number: WO 2010/095534

(56) References cited:
- EP-A1- 1 806 489
- GB-A- 2 031 069
- JP-A- H10 103 071
- JP-A- 2000 110 576
- JP-A- 2006 153 002
- JP-A- 2007 023 894
- JP-U- S6 010 834
- US-A- 4 655 038
- US-A- 5 758 500
- US-A1- 2002 043 066

## Description

### {Technical Field}

The present invention relates to turbochargers used in combination with a large-sized internal combustion engine, such as an internal combustion engine for ships and an electric-power-generation internal combustion engine.

### {Background Art}

A known example of turbochargers that compress combustion air for an internal combustion engine and forcibly feed the high-density air into a combustion chamber is disclosed in Patent Literature 1.

### {Citation List}

### {Patent Literature}

{PTL 1} Japanese Unexamined Patent Application, Publication No. 2007-64126

### {Summary of Invention}

### {Technical Problem}

The turbocharger disclosed in the above Patent Literature 1 is configured to change a nozzle opening (the opening area of a nozzle portion) by rotating a nozzle vane (turbine nozzle) to adjust the flow velocity of exhaust air flowing into an exhaust-air turbine wheel.

However, such a turbocharger has a problem in that a complicated mechanism for rotating the nozzle vane is needed, thus increasing the manufacturing costs and maintenance costs. Such a turbocharger also has a problem in that a gap for rotating the nozzle vane is needed, so that exhaust gas leaks from the gap, thus deteriorating the performance of the turbine. Furthermore, with such a turbocharger, there is a risk of dust etc. in the exhaust gas entering the gap for rotating the nozzle vane, making it impossible for the nozzle vane to rotate smoothly.

US 5758500 A discloses an exhaust gas turbo charger for an internal combustion engine where the exhaust turbine includes radial and semi-axial flow passages which are separated by a guide ring and through which the exhaust gases are conducted to the turbine wheel. Depending on the exhaust gas mass flow the radial passage can be closed in that the flow entrance is covered by an annular sleeve slideably moved across the radial flow passage along the axis of the turbine wheel.

US 4655038 A discloses an exhaust gas turbo charger for internal combustion engines where two different exhaust gas channels leading the exhaust gas to blades of a turbine rotor are connected through a butterfly valve that is supported in a thickening of a partition wall between the gas channels.

GB 2031069 A discloses a turbo charger where the turbine inflow passage is divided into a number of sub-channels by annular partitions and an annular shutter is mounted coaxially with the annular partitions and is slideable along its axis for closing one or more of the sub-channels during starting and under partial load of the internal combustion engine. An operating part of the valve in the form of a handle of the shutter is accessible from the outside.

JP S 6010834 U discloses a structure of an exhaust gas turbo charger in which sub-channels of an exhaust gas channel are communicated via an upstream volume and a valve is integrated into a separation wall.

US 2002/043066 A1 discloses an exhaust gas turbo charger for an internal combustion engine where the turbine geometry is adjustable between a shut-off position that minimizes the turbine inlet flow cross-section and an open position that maximizes the turbine inlet flow cross-section. A radial turbine wheel entry cross-section and a cross-section of a connecting aperture between a main flow passage and a further exhaust gas channel is changed by means of an actuator that is axially slideably disposed within the turbo charger.

The present invention is made in consideration of such circumstances, and it is an object thereof to provide a turbocharger having a simple configuration in which the manufacturing costs and maintenance costs can be reduced, and the performance of the turbine can be enhanced.

### {Solution to Problem}

The present invention to solve the problems described above provides a turbocharger with the features of claim 1 or claim 2.

A turbocharger according to a first aspect of the present invention is a turbocharger that compresses combustion air for an internal combustion engine and forcibly feeds high-density air into a combustion chamber of the internal combustion engine, wherein a space formed between an inner casing is configured to serve as a first exhaust gas channel for guiding exhaust gas discharged from the internal combustion engine to the outer periphery side of a turbine nozzle; a second exhaust gas channel for guiding exhaust gas that branches at an intermediate point in the first exhaust gas channel to the inner periphery side of the turbine nozzle is formed at the inner periphery side of the inner casing; and an intermediate portion of the first exhaust gas channel and a gas inlet of the second exhaust gas channel are communicated through an exhaust gas pipe, and an on/off valve is connected at an intermediate point in the exhaust gas pipe.

A turbocharger according to a second aspect of the present invention is a turbocharger that compresses combustion air for an internal combustion engine and forcibly feeds high-density air into a combustion chamber of the internal combustion engine, wherein a space formed between an inner casing and an outer casing is configured to serve as a first exhaust gas channel for guiding exhaust gas discharged from the internal combustion engine to the inner periphery side of a turbine nozzle; a second exhaust gas channel for guiding exhaust gas that branches at an intermediate point in the first exhaust gas channel to the outer periphery side of the turbine nozzle is formed at the outer periphery side of the inner casing; and an intermediate portion of the first exhaust gas channel and a gas inlet of the second exhaust gas channel are communicated through an exhaust gas pipe, and an on/off valve is connected at an intermediate point in the exhaust gas pipe.

Since the turbocharger according to the first aspect or the second aspect of the present invention does not need a complicated mechanism for rotating the turbine nozzle, manufacturing costs and maintenance costs can be reduced.

Furthermore, since such a turbocharger does not need a gap for rotating the turbine nozzle either, so that exhaust gas does not leak through this gap as in the conventional ones, the performance of the turbine can be enhanced.

Furthermore, since such a turbocharger does not need a gap for rotating the turbine nozzle, dust etc. in the exhaust gas does not enter the gap as in the conventional ones, and it is possible to prevent a phenomenon whereby the flow velocity of exhaust air flowing into the turbine moving blades cannot be adjusted.

In the turbocharger, it is more preferable that the inner casing and the outer casing be formed as a single body.

Since such a turbocharger does not need a structure and assembly work for combining the inner casing and the outer casing into one piece, manufacturing costs and maintenance costs can be further reduced, and working processes can be simplified.

In the turbocharger, it is more preferable that a one-end inner periphery of the inner casing located adjacent to the turbine nozzle be a separate, hollow, cylindrical member.

In the turbocharger, it is more preferable that a one-end inner periphery of the inner casing located adjacent to the turbine nozzle be a separate, hollow, conical member.

Since such a turbocharger eliminates the need for a long narrow portion (a portion that forms a narrow gap) in the shape of a mold (sand mold), thus allowing the shape of the mold (sand mold) to be simplified, removal of the mold during a casting process can be made easy.

A method for operating a turbocharger according to a third aspect of the present invention is a method for operating a turbocharger of the invention that compresses combustion air for an internal combustion engine and forcibly feeds high-density air into a combustion chamber of the internal combustion engine, wherein when the load of the internal combustion engine is low, and the amount of exhaust gas is small, the on/off valve is fully closed, and when the load of the internal combustion engine is high, and the amount of exhaust gas is large, the on/off valve is fully opened.

According to the method for operating the turbocharger according to the third aspect of the present invention, for example, when the load of the internal combustion engine is low, and the amount of exhaust gas is small, the on/off valve is fully closed, and when the load of the internal combustion engine is high, and the amount of exhaust gas is large, the on/off valve is fully opened.

That is, when the load of the internal combustion engine is low, and the amount of exhaust gas is small, the whole amount of exhaust gas introduced through the gas inlet of the gas inlet casing is guided to a gas outlet through the exhaust gas channel. The exhaust gas guided to the gas outlet is sucked to the outer periphery side of the turbine nozzle through the gas outlet that opens around the entire circumference in the rotating direction and expands while passing through the turbine moving blades to rotate the rotor disc and the rotor shaft.

On the other hand, when the load of the internal combustion engine is high, and the amount of exhaust gas is large, most (about 70 to 95%) of the exhaust gas introduced through the gas inlet of the gas inlet casing is guided to the gas outlet through the exhaust gas channel, and part (about 5 to 30%) of the exhaust gas introduced through the gas inlet of the gas inlet casing is guided to a gas outlet through the exhaust gas pipe, the on/off valve, and the second exhaust gas channel. The exhaust gas that is guided to the gas outlet is sucked through the gas outlet that opens around the entire circumference in the rotating direction to the outer periphery side of the turbine nozzle, and the exhaust gas guided to the gas outlet is sucked through the gas outlet that opens around the entire circumference in the rotating direction to the inner periphery side of the turbine nozzle and expands while passing through the turbine moving blades to rotate the rotor disc and the rotor shaft.

This can eliminate the need for a complicated mechanism for rotating the turbine nozzle, thus allowing manufacturing costs and maintenance costs to be reduced.

Furthermore, this can eliminate the need for a gap for rotating the turbine nozzle, which can prevent exhaust gas from leaking through this gap as in the conventional ones, thus enhancing the performance of the turbine.

Furthermore, this can eliminate the need for a gap for rotating the turbine nozzle, which can prevent dust etc. in the exhaust gas from entering the gap as in the conventional ones, thus preventing a phenomenon in which the flow velocity of exhaust air flowing into the turbine moving blades.

### {Advantageous Effects of Invention}

The turbocharger according to the present invention offers the advantages that it has a simple configuration with which the manufacturing costs and maintenance costs can be reduced, and the performance of the turbine can be enhanced.

### {Brief Description of Drawings}

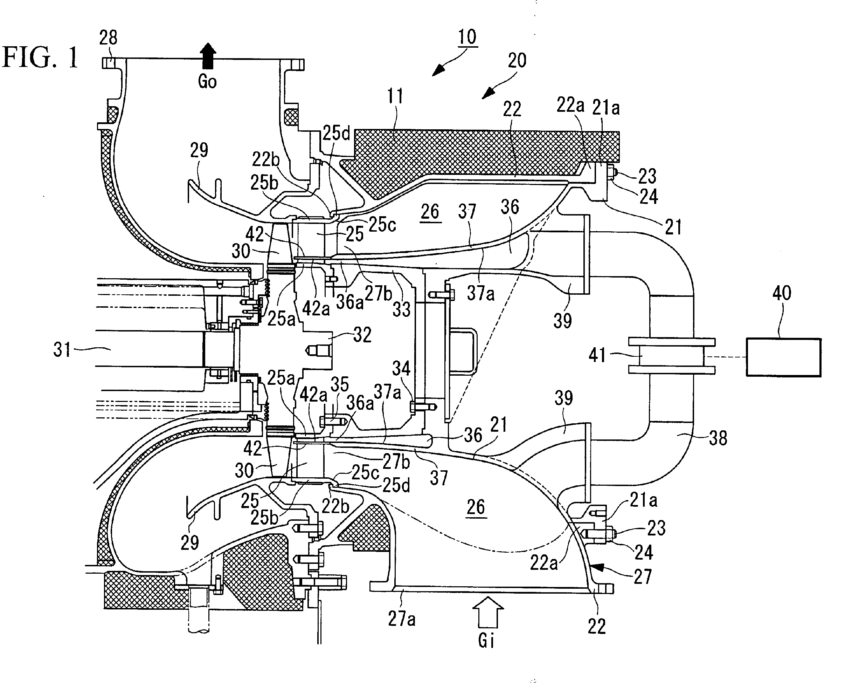

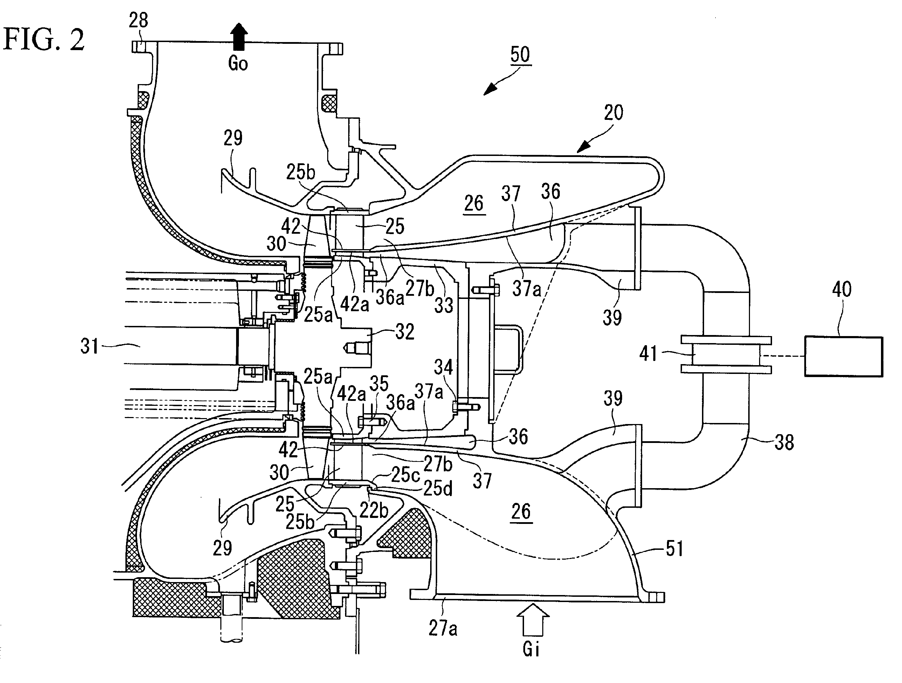

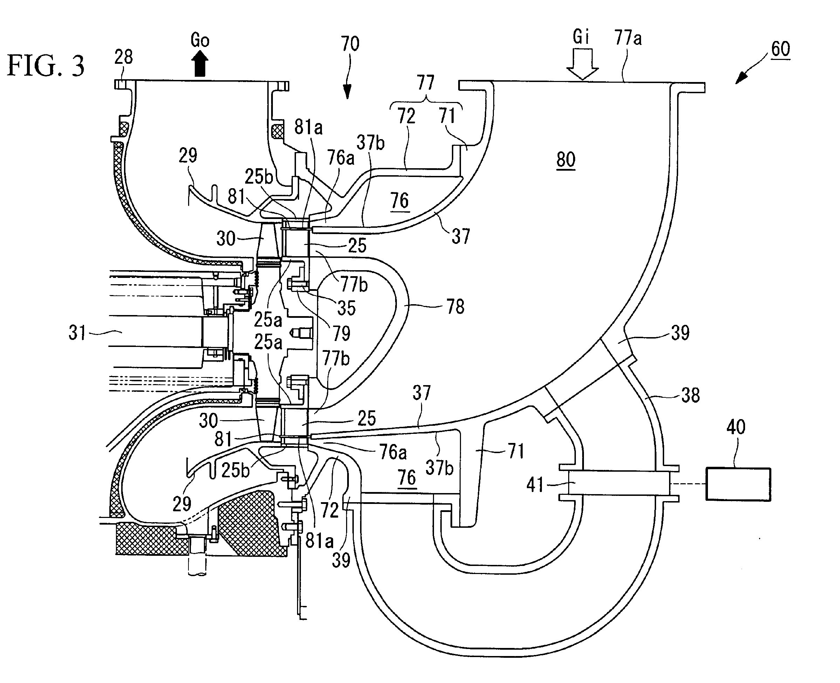

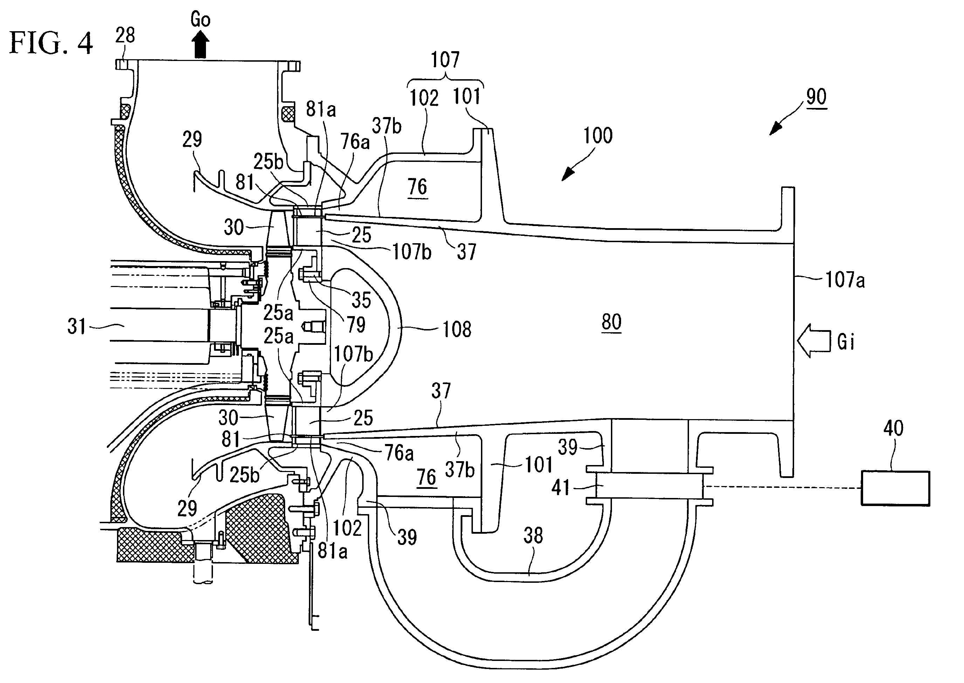

{Fig. 1} Fig. 1 is a partial sectional configuration diagram illustrating, in cross section, an example of the turbine-side internal configuration of a turbocharger according to a first embodiment of the present invention.
{Fig. 2} Fig. 2 is a partial sectional configuration diagram illustrating, in cross section, an example of the turbine-side internal configuration of a turbocharger according to a second embodiment of the present invention.
{Fig. 3} Fig. 3 is a partial sectional configuration diagram illustrating, in cross section, an example of the turbine-side internal configuration of a turbocharger according to a third embodiment of the present invention.
{Fig. 4} Fig. 4 is a partial sectional configuration diagram illustrating, in cross section, an example of the turbine-side internal configuration of a turbocharger according to a fourth embodiment of the present invention.

### {Description of Embodiments}

A turbocharger (also referred to as "exhaust-gas turbine supercharger") according to a first embodiment of the present invention will be described hereinbelow with reference to Fig. 1.

Fig. 1 is a partial sectional configuration diagram illustrating, in cross section, an example of the turbine-side internal configuration of a turbocharger 10 for a large-sized internal combustion engine in which a turbine and a compressor are disposed coaxially.

The turbocharger 10 is, for example, an axial flow turbine configured to rotate a coaxial compressor (not shown) with shaft output obtained when exhaust gas from an internal combustion engine introduced to an axial flow turbine 20 expands and to supply compressed air compressed to high density to the internal combustion engine.

The lattice-like hatched portions in Fig. 1 are thermal insulators 11 provided for the purpose of thermal insulation and noise insulation.

The axial flow turbine 20 is provided with a gas inlet casing 27 configured such that a separate inner casing 21 and outer casing 22 are combined with fastening means (for example, a stud bolt 23 and a nut 24), and a space formed between the inner casing 21 and the outer casing 22 serves as an exhaust gas channel (first exhaust gas channel: main exhaust gas channel) 26 for guiding the exhaust gas to a turbine nozzle 25.

In such a double-structure gas inlet casing 27, the exhaust gas channel 26 is formed around the entire circumference in the rotating direction of the axial flow turbine 20, and the exhaust gas introduced through a gas inlet 27a of the gas inlet casing 27, as indicated by arrow Gi in Fig. 1, is guided to a gas outlet 27b through the exhaust gas channel 26 and is thereafter discharged to the outside from an outlet in a gas-outlet casing 28, as indicated by arrow Go in Fig. 1. The gas outlet 27b is provided as an opening around the entire circumference in the rotating direction so as to supply the exhaust gas to the turbine nozzle 25.

Reference sign 29 in Fig. 1 denotes a gas guide pipe provided downstream of turbine moving blades 30.

The axial flow turbine 20 includes a rotor disc 32 provided at one end of a rotor shaft 31 and a large number of turbine moving blades 30 mounted to the rim of the rotor disc 32 along the circumferential direction. The turbine moving blades 30 are provided in the vicinity of the downstream side serving as the outlet of the turbine nozzle 25. High-temperature exhaust gas that jets from the turbine nozzle 25 expands through the turbine moving blades 30, so that the rotor disc 32 and the rotor shaft 31 are rotated.

In the double-structure gas inlet casing 27 described above, one end of the inner casing 21 is fixedly supported to one end of the outer casing 22 with the fastening means (for example, the stud bolt 23 and the nut 24). That is, the inner casing 21 is fixedly supported by fastening the fastening means (for example, the nut 24) in a state in which a flange surface 21a formed at the end of the casing at the right in the plane of the drawing, opposite the rotor disc 32, and a flange surface 22a of the outer casing 22, formed so as to face this flange surface 21a, are joined together. Both the flange surfaces 21a and 22a are surfaces perpendicular to the axial direction of the rotor shaft 31 rotating together with the rotor disc 32.

Furthermore, the inner periphery of the other end of the inner casing 21 (an end adjacent to the rotor disc 32) (an other-end inner periphery side) has a structure in which a hollow, cylindrical member 33 is joined (mounted) with a bolt 34, and an inner peripheral member 25a of a ring-shaped member (nozzle ring) that forms the turbine nozzle 25 is joined (mounted) to an end face (an end face adjacent to the rotor disc 32) of the member 33 with a bolt 35. The ring-shaped member, which is generally called a nozzle ring and forms the turbine nozzle 25, has a double-ring structure in which the ring members of the inner peripheral member 25a and the outer peripheral member 25b having a predetermined space therebetween are joined with a partition member.

On the other hand, the outer peripheral member 25b of the nozzle ring that forms the turbine nozzle 25 is configured such that an end inner peripheral surface 25c at the gas inlet side (the side adjacent to the gas outlet 27b) is increased in diameter into a horn shape. Furthermore, the end of the outer casing 22 adjacent to the rotor disc 32 has a level-difference portion 22b formed by bending the inner peripheral surface of the outer casing 22 toward the rotor disc 32. This level-difference portion 22b and a level-difference portion 25d provided at the gas-inlet side edge of the nozzle ring 25 are configured to engage (fit) together in the axial direction.

Furthermore, the gas guide pipe 29 is joined with the gas-outlet-side (turbine moving blades 30 side) edge of the outer peripheral member 25b of the turbine nozzle 25. The joint between the outer peripheral member 25b of the turbine nozzle 25 and the gas guide pipe 29 has a socket-and-spigot structure in which the ends are fitted to each other.

The inner periphery side (radially inner side) of the inner casing 21 according to this embodiment is provided with, around the entire circumference in the rotating direction of the axial flow turbine 20, an exhaust gas channel (second exhaust gas channel: auxiliary exhaust gas channel) 36 that guides the exhaust gas that branches at an intermediate point in the exhaust gas channel 26 to the inner periphery side (radially inner side) of the turbine nozzle 25. This exhaust gas channel 36 is provided at the inner periphery side (radially inner side) of the exhaust gas channel 26, and the exhaust gas channel 26 and the exhaust gas channel 36 are partitioned by a bulkhead (partition wall) 37 that forms the inner casing 21.

Furthermore, a one-end inner periphery (one-end periphery side) of the inner casing 21 is provided with a flange 39 for connecting a pipe (exhaust gas pipe) 38, and an on/off valve (for example, a butterfly valve) 41 that is automatically opened and closed by a control unit 40 is connected at an intermediate point in the pipe 38. The exhaust gas that branches at an intermediate point in the exhaust gas channel 26 passes through a channel (not shown) formed in the flange 39 and the pipe 38 and is guided to the exhaust gas channel 36.

Furthermore, a bulkhead (partition wall) 42 whose inner peripheral surface (radially inner side surface) 42a is flush with the inner peripheral surface (radially inner side surface) 37a of the bulkhead 37 and which partitions the inner periphery side and the outer periphery side of the turbine nozzle 25 from each other is provided at the base (adjacent to the inner peripheral member 25a) of the turbine nozzle 25.

If the position of the base of the turbine nozzle 25 (the position at which the bulkhead 42 is joined with the inner peripheral member 25a) is defined as a blade length of 0%, and the position of the distal end of the turbine nozzle 25 (the position at which the bulkhead 42 is joined with the outer peripheral member 25b) is defined as a blade length of 100%, the bulkhead 42 is provided at a blade length of about 10%.

In the thus-configured turbocharger 10, for example, when the load of the internal combustion engine is low, and the amount of exhaust gas is small, the on/off valve 41 is fully closed, and when the load of the internal combustion engine is high, and the amount of exhaust gas is large, the on/off valve 41 is fully opened.

That is, when the load of the internal combustion engine is low, and the amount of exhaust gas is small, the whole amount of exhaust gas introduced through the gas inlet 27a of the gas inlet casing 27 is guided to the gas outlet 27b through the exhaust gas channel 26. The exhaust gas guided to the gas outlet 27b is sucked to the outer periphery side of the turbine nozzle 25 (into the space partitioned by the outer peripheral member 25b and the bulkhead 42) through the gas outlet 27b that opens around the entire circumference in the rotating direction and expands while passing through the turbine moving blades 30 to rotate the rotor disc 32 and the rotor shaft 31.

On the other hand, when the load of the internal combustion engine is high, and the amount of exhaust gas is large, most (about 70 to 95%) of the exhaust gas introduced through the gas inlet 27a of the gas inlet casing 27 is guided to the gas outlet 27b through the exhaust gas channel 26, and part (about 5 to 30%) of the exhaust gas introduced through the gas inlet 27a of the gas inlet casing 27 is guided to the gas outlet 36a through the flange 39, the pipe 38, the on/off valve 41, and the exhaust gas channel 36. The exhaust gas that is guided to the gas outlet 27b is sucked through the gas outlet 27b that opens around the entire circumference in the rotating direction to the outer periphery side of the turbine nozzle 25 (into the space partitioned by the outer peripheral member 25b and the bulkhead 42), and the exhaust gas guided to the gas outlet 36a is sucked through the gas outlet 36a that opens around the entire circumference in the rotating direction to the inner periphery side of the turbine nozzle 25 (into the space partitioned by the inner peripheral member 25a and the bulkhead 42) and expands while passing through the turbine moving blades 30 to rotate the rotor disc 32 and the rotor shaft 31.

Since the rotor disc 32 and the rotor shaft 31 rotate, a compressor (not shown) provided at the other end of the rotor shaft 31 is driven, so that the air to be supplied to the internal combustion engine is compressed.

The air compressed by the compressor is sucked through a filter (not shown), and the exhaust gas that has expanded at the turbine moving blades 30 is guided to the gas outlet guide tube 29 and the gas-outlet casing 28 and is discharged to the outside.

The on/off valve 41 is fully closed, for example, when the absolute pressure of air delivered (discharged) from the compressor, or the absolute pressure of air supplied to the combustion chamber of the internal combustion engine, is lower than 0.2 MPa (2 bar), that is, the internal combustion engine is driven under low load, and is fully opened when the absolute pressure of air delivered (discharged) out of the compressor, or the absolute pressure of air supplied to the combustion chamber of the internal combustion engine, is 0.2 MPa (2 bar) or higher, that is, the internal combustion engine is driven under high load.

Since the turbocharger 10 according to this embodiment does not need a complicated mechanism for rotating the turbine nozzle 25, manufacturing costs and maintenance costs can be reduced.

Furthermore, since such a turbocharger 10 does not need a gap for rotating the turbine nozzle 25, and thus, exhaust gas does not leak through this gap as in the conventional ones, the performance of the turbine can be enhanced.

Furthermore, since such a turbocharger 10 does not need a gap for rotating the turbine nozzle 25, dust etc. in the exhaust gas does not enter the gap as in the conventional ones, and it is possible to prevent a phenomenon whereby the flow velocity of exhaust air flowing into the turbine moving blades 30 cannot be adjusted.

Furthermore, the inner casing 21 has a two-piece structure for facilitating removal of molds during a casting process, that is, a structure in which the other-end inner periphery of the inner casing 21 is formed of a separate member (member 33), and the member 33 is joined with the bolt 34.

In such a double-structure gas inlet casing 27 in which an exhaust gas channel is formed, since the exhaust gas flows in direct contact with both the inner casing 21 and the outer casing 22, there is no difference between the thermal effects of the exhaust gas on the inner casing 21 and the outer casing 22. This therefore causes no significant difference in thermal expansion between the inner casing 21 and the outer casing 22, which reduces thermal stress exerted on the components of the axial flow turbine 20, thus making it easier to maintain a proper turbine gap.

This reduces difficulty in designing the axial flow turbine 20 and the turbocharger 10 in consideration of a difference in thermal expansion and, moreover, enhances the performance and reliability.

Furthermore, with the double-casing structure in which there is no significant temperature difference between the inner casing 21 and the outer casing 2, thermal expansion in the radial direction is uniform, which allows the socket-and-spigot structure of the turbine nozzle 25 and the gas guide pipe 29, described above. Such a socket-and-spigot structure can not only enhance the sealing performance of the fitted portion to prevent gas leakage but also facilitate the work of assembling and disassembling the axial flow turbine 20 for maintenance etc. since the socket-and-spigot portion serves as a guide.

Furthermore, since the double-structure exhaust gas channels 26 and 36 are provided around the entire circumference in the rotating direction of the turbine, and both the inner casing 21 and the outer casing 22 have no unnecessary members, the gas inlet casing 27 can be reduced in weight.

A turbocharger (also referred to as "exhaust-gas turbine supercharger") according to a second embodiment of the present invention will be described with reference to Fig. 2.

Fig. 2 is a partial sectional configuration diagram illustrating, in cross section, an example of the turbine-side internal configuration of a turbocharger 50 for a large-sized internal combustion engine in which a turbine and a compressor are disposed coaxially.

As shown in Fig. 2, the turbocharger 50 according to this embodiment differs from that of the first embodiment described above in that a gas inlet casing 51 is provided instead of the gas inlet casing 27. Since the other components are the same as those of the first embodiment described above, descriptions of those components are omitted here.

The same members as those of the foregoing first embodiment are given the same reference signs.

The gas inlet casing 51 is a cast in which the inner casing 21 and the outer casing 22 described in the first embodiment are formed by casting as a single body. Accordingly, this embodiment does not need the flange surfaces 21a and 22a, the stud bolt 23, and the nut 24 described in the first embodiment, nor the assembly work for combining the inner casing 21 and the outer casing 22 into one piece.

With the turbocharger 50 according to this embodiment, manufacturing costs and maintenance costs can be further reduced, and the process for assembling or disassembling the axial flow turbine 20 for maintenance etc. can be simplified.

Since the other operational advantages are the same as those of the first embodiment described above, descriptions thereof will be omitted here.

The turbochargers 10 and 50 described above need not be used only in combination with a large-sized internal combustion engine, such as an internal combustion engine for ships and an electric-power-generation internal combustion engine, and may be used in combination with various other internal combustion engines.

A turbocharger (also referred to as "exhaust-gas turbine supercharger") according to a third embodiment of the present invention will be described with reference to Fig. 3.

Fig. 3 is a partial sectional configuration diagram illustrating, in cross section, an example of the turbine-side internal configuration of a turbocharger 60 for a small-sized internal combustion engine in which a turbine and a compressor are disposed coaxially.

As shown in Fig. 3, the turbocharger 60 according to this embodiment differs from that of the first embodiment described above in that an axial flow turbine 70 is provided instead of the axial flow turbine 20. Since the other components are the same as those of the first embodiment described above, descriptions of those components are omitted here.

The same members as those of the foregoing first embodiment are given the same reference signs.

The axial flow turbine 70 is provided with a gas inlet casing 77 configured such that a separate inner casing 71 and outer casing 72 are combined with fastening means (for example, the stud bolt 23 and the nut 24 (see Fig. 1)), and a space formed between the inner casing 71 and the outer casing 72 serves as an exhaust gas channel (second exhaust gas channel: auxiliary exhaust gas channel) 76 for guiding the exhaust gas to the turbine nozzle 25.

In such a double-structure gas inlet casing 77, the exhaust gas channel 76 is formed around the entire circumference in the rotating direction of the axial flow turbine 60, and the exhaust gas introduced through a gas inlet 77a of the gas inlet casing 77, as indicated by arrow Gi in Fig. 3, is guided to a gas outlet 77b through the exhaust gas channel 76 and is thereafter discharged to the outside from an outlet in the gas-outlet casing 28, as indicated by arrow Go in Fig. 3. The gas outlet 77b is provided as an opening around the entire circumference in the rotating direction so as to supply the exhaust gas to the turbine nozzle 25.

Furthermore, the inner periphery of one end of the inner casing 71 (an end adjacent to the rotor disc 32) (one-end inner periphery side) is provided with a hollow, conical member 78, and the inner peripheral member 25a of the ring-shaped member (nozzle ring) that forms the turbine nozzle 25 is joined (mounted) to an end face (an end face adjacent to the rotor disc 32) of the member 78 with the bolt 35 and a fastener 79.

The inner periphery side (radially inner side) of the inner casing 71 according to this embodiment is provided with, around the entire circumference in the rotating direction of the axial flow turbine 60, an exhaust gas channel (first exhaust gas channel: main exhaust gas channel) 80 that guides the exhaust gas introduced through the gas inlet 77a to the inner periphery side (radially inner side) of the turbine nozzle 25. This exhaust gas channel 80 is provided at the inner periphery side (radially inner side) of the exhaust gas channel 76, and the exhaust gas channel 76 and the exhaust gas channel 80 are partitioned by the bulkhead (partition wall) 37 that forms the inner casing 71.

Furthermore, a central outer periphery side in the lengthwise direction of the inner casing 71 is provided with the flange 39 for connecting one end of the pipe (exhaust gas pipe) 38; one side of the outer casing 72 is provided with the flange 39 for connecting the other end of the pipe 38; and the on/off valve (for example, a butterfly valve) 41 that is automatically opened and closed by the control unit 40 is connected at an intermediate point in the pipe 38. The exhaust gas that branches at an intermediate point in the exhaust gas channel 80 passes through a channel (not shown) formed in the flange 39 and the pipe 38 and is guided to the exhaust gas channel 76.

Furthermore, a bulkhead (partition wall) 81 whose outer peripheral surface (radially outer side surface) 81a is flush with the outer peripheral surface (radially outer side surface) 37b of the bulkhead 37 and which partitions the inner periphery side and the outer periphery side of the turbine nozzle 25 from each other is provided at the distal end (adjacent to the outer peripheral member 25b) of the turbine nozzle 25.

If the position of the base of the turbine nozzle 25 (the position at which the bulkhead 81 is joined with the inner peripheral member 25a) is defined as a blade length of 0%, and the position of the distal end of the turbine nozzle 25 (the position at which the bulkhead 81 is joined with the outer peripheral member 25b) is defined as a blade length of 100%, the bulkhead 81 is provided at a blade length of about 90%.

In the thus-configured turbocharger 60, for example, when the load of the internal combustion engine is low, and the amount of exhaust gas is small, the on/off valve 41 is fully closed, and when the load of the internal combustion engine is high, and the amount of exhaust gas is large, the on/off valve 41 is fully opened.

That is, when the load of the internal combustion engine is low, and the amount of exhaust gas is small, the whole amount of exhaust gas introduced through the gas inlet 77a of the gas inlet casing 77 is guided to the gas outlet 77b through the exhaust gas channel 80. The exhaust gas guided to the gas outlet 77b is sucked to the inner periphery side of the turbine nozzle 25 (into the space partitioned by the inner peripheral member 25a and the bulkhead 81) through the gas outlet 77b that opens around the entire circumference in the rotating direction and expands while passing through the turbine moving blades 30 to rotate the rotor disc 32 and the rotor shaft 31.

On the other hand, when the load of the internal combustion engine is high, and the amount of exhaust gas is large, most (about 70 to 95%) of the exhaust gas introduced through the gas inlet 77a of the gas inlet casing 77 is guided to the gas outlet 77b through the exhaust gas channel 80, and part (about 5 to 30%) of the exhaust gas that is introduced through the gas inlet 77a of the gas inlet casing 77 is guided to the gas outlet 76a through the flange 39, the pipe 38, the on/off valve 41, and the exhaust gas channel 76. The exhaust gas that is guided to the gas outlet 77b is sucked through the gas outlet 77b that opens around the entire circumference in the rotating direction to the inner periphery side of the turbine nozzle 25 (into the space partitioned by the inner peripheral member 25a and the bulkhead 81), and the exhaust gas guided to the gas outlet 76a is sucked through the gas outlet 76a that opens around the entire circumference in the rotating direction to the outer periphery side of the turbine nozzle 25 (into the space partitioned by the outer peripheral member 25b and the bulkhead 81) and expands while passing through the turbine moving blades 30 to rotate the rotor disc 32 and the rotor shaft 31.

Since the rotor disc 32 and the rotor shaft 31 rotate, a compressor (not shown) provided at the other end of the rotor shaft 31 is driven, so that the air to be supplied to the internal combustion engine is compressed.

The air compressed by the compressor is sucked through a filter (not shown), and the exhaust gas that has expanded at the turbine moving blades 30 is guided to the gas outlet guide tube 29 and the gas-outlet casing 28 and is discharged to the outside.

The on/off valve 41 is fully closed, for example, when the absolute pressure of air delivered (discharged) from the compressor, or the absolute pressure of air supplied to the combustion chamber of the internal combustion engine, is lower than 0.2 MPa (2 bar), that is, the internal combustion engine is driven under low load, and is fully opened when the absolute pressure of air delivered (discharged) out of the compressor, or the absolute pressure of air supplied to the combustion chamber of the internal combustion engine, is 0.2 MPa (2 bar) or higher, that is, the internal combustion engine is driven under high load.

Since the operational advantages of the turbocharger 60 according to this embodiment are the same as those of the first embodiment described above, descriptions thereof will be omitted here.

A turbocharger (also referred to as "exhaust-gas turbine supercharger") according to a fourth embodiment of the present invention will be described with reference to Fig. 4.

Fig. 4 is a partial sectional configuration diagram illustrating, in cross section, an example of the turbine-side internal configuration of a turbocharger 90 for a small-sized internal combustion engine in which a turbine and a compressor are disposed coaxially.

As shown in Fig. 4, the turbocharger 90 according to this embodiment differs from that of the third embodiment described above in that an axial flow turbine 100 is provided instead of the axial flow turbine 70. Since the other components are the same as those of the third embodiment described above, descriptions of those components are omitted here.

The same members as those of the foregoing third embodiment are given the same reference signs.

The axial flow turbine 100 is provided with a gas inlet casing 107 configured such that a separate inner casing 101 and outer casing 102 are combined with fastening means (for example, the stud bolt 23 and the nut 24 (see Fig. 1)), and a space formed between the inner casing 101 and the outer casing 102 serves as an exhaust gas channel (second exhaust gas channel: auxiliary exhaust gas channel) 76 for guiding the exhaust gas to the turbine nozzle 25.

In such a double-structure gas inlet casing 107, the exhaust gas channel 76 is formed around the entire circumference in the rotating direction of the axial flow turbine 100, and the exhaust gas introduced through a gas inlet 107a of the gas inlet casing 107, as indicated by arrow Gi in Fig. 4, is guided to a gas outlet 107b through the exhaust gas channel 76 and is thereafter discharged to the outside from the outlet in the gas-outlet casing 28, as indicated by arrow Go in Fig. 4. The gas outlet 107b is provided as an opening around the entire circumference in the rotating direction so as to supply the exhaust gas to the turbine nozzle 25.

Furthermore, the inner periphery of one end of the inner casing 101 (an end adjacent to the rotor disc 32) (one-end inner periphery side) is provided with a hollow, conical member 108, and the inner peripheral member 25a of the ring-shaped member (nozzle ring) that forms the turbine nozzle 25 is joined (mounted) to an end face (an end face adjacent to the rotor disc 32) of the member 108 with the bolt 35 and the fastener 79.

The inner periphery side (radially inner side) of the inner casing 101 according to this embodiment is provided with, around the entire circumference in the rotating direction of the axial flow turbine 100, the exhaust gas channel (first exhaust gas channel: main exhaust gas channel) 80 that guides the exhaust gas introduced through the gas inlet 107a to the inner periphery side (radially inner side) of the turbine nozzle 25. This exhaust gas channel 80 is provided at the inner periphery side (radially inner side) of the exhaust gas channel 76, and the exhaust gas channel 76 and the exhaust gas channel 80 are partitioned by the bulkhead (partition wall) 37 that forms the inner casing 101.

Furthermore, one side at one end of the inner casing 101 is provided with the flange 39 for connecting the on/off valve (for example, a butterfly valve) 41 that is automatically opened and closed by the control unit 40, one side of the outer casing 102 is provided with the flange 39 for connecting the other end of the pipe 38; and one end of the pipe (exhaust gas pipe) is connected to the on/off valve 41. The exhaust gas that branches at an intermediate point in the exhaust gas channel 80 passes through a channel (not shown) formed in the flange 39 and the pipe 38 and is guided to the exhaust gas channel 76.

In the thus-configured turbocharger 90, for example, when the load of the internal combustion engine is low, and the amount of exhaust gas is small, the on/off valve 41 is fully closed, and when the load of the internal combustion engine is high, and the amount of exhaust gas is large, the on/off valve 41 is fully opened.

That is, when the load of the internal combustion engine is low, and the amount of exhaust gas is small, the whole amount of exhaust gas introduced through the gas inlet 107a of the gas inlet casing 107 is guided to the gas outlet 107b through the exhaust gas channel 80. The exhaust gas guided to the gas outlet 107b is sucked to the inner periphery side of the turbine nozzle 25 (into the space partitioned by the inner peripheral member 25a and the bulkhead 81) through the gas outlet 107b that opens around the entire circumference in the rotating direction and expands while passing through the turbine moving blades 30 to rotate the rotor disc 32 and the rotor shaft 31.

On the other hand, when the load of the internal combustion engine is high, and the amount of exhaust gas is large, most (about 70 to 95%) of the exhaust gas guided through the gas inlet 107a of the gas inlet casing 107 is guided to the gas outlet 107b through the exhaust gas channel 80, and part (about 5 to 30%) of the exhaust gas that is introduced through the gas inlet 107a of the gas inlet casing 107 is guided to the gas outlet 76a through the flange 39, the pipe 38, the on/off valve 41, and the exhaust gas channel 76. The exhaust gas that is guided to the gas outlet 107b is sucked through the gas outlet 107b that opens around the entire circumference in the rotating direction to the inner periphery side of the turbine nozzle 25 (into the space partitioned by the inner peripheral member 25a and the bulkhead 81), and the exhaust gas guided to the gas outlet 76a is sucked through the gas outlet 76a that opens around the entire circumference in the rotating direction to the outer periphery side of the turbine nozzle 25 (into the space partitioned by the outer peripheral member 25b and the bulkhead 81) and expands while passing through the turbine moving blades 30 to rotate the rotor disc 32 and the rotor shaft 31.

Since the rotor disc 32 and the rotor shaft 31 rotate, a compressor (not shown) provided at the other end of the rotor shaft 31 is driven, so that air to be supplied to the internal combustion engine is compressed.

Since the operational advantages of the turbocharger 90 according to this embodiment are the same as those of the first embodiment described above, descriptions thereof will be omitted here.

The turbochargers 60 and 90 described above need not be used only in combination with a small-sized internal combustion engine, such as an internal combustion engine for ships and an electric-power-generation internal combustion engine, and may be used in combination with various other internal combustion engines.

Furthermore, the present invention is not limited to the foregoing embodiments and may be modified as appropriate without departing from the spirit of the present invention.

The foregoing embodiments have been described using concrete examples in which, when the load of the internal combustion engine is low, and the amount of exhaust gas is small, the on/off valve 41 is fully closed, and when the load of the internal combustion engine is high, and the amount of exhaust gas is large, the on/off valve 41 is fully opened, that is, the on/off valve 41 is used in a fully open position or a fully closed position. However, the present invention is not limited thereto; for example, the control unit 40 may adjust the opening of the on/off valve 41 according to the load of the internal combustion engine. That is, it is also possible that, when the load of the internal combustion engine is in a low load region equal to or lower than a first predetermined value, the on/off valve 41 is fully closed; when the load of the internal combustion engine is in a high load region exceeding a second predetermined value higher than the first predetermined value, the on/off valve 41 is fully opened; and when the load of the internal combustion engine is in an intermediate load region exceeding the first predetermined value and equal to or lower than the second predetermined value, the control unit 40 changes, for example, linearly, the opening of the on/off valve 41 according to the load of the internal combustion engine.

This allows the rotational speed of the turbochargers 10, 50, 60, and 90 to be changed continuously and finely according to the load of the internal combustion engine, thus preventing surging and vibration of the turbochargers 10, 50, 60, and 90 more effectively.

Furthermore, the gas inlet casings 27, 51, 77, and 107 including the pipe 38 and the on/off valve 41 can be applied not only to the axial flow turbines 20, 70, and 100 and the turbochargers 10, 50, 60, and 90, shown in one of Figs. 1 to 4, but also to rotary machines, such as centrifugal/radial flow turbines and power turbines.

### {Reference Signs List}

- 10: turbocharger
- 21: inner casing
- 22: outer casing
- 25: turbine nozzle
- 26: exhaust gas channel (first exhaust gas channel)
- 33: member
- 36: exhaust gas channel (second exhaust gas channel)
- 38: pipe (exhaust gas pipe)
- 41: on/off valve
- 50: turbocharger
- 60: turbocharger
- 71: inner casing
- 72: outer casing
- 76: exhaust gas channel (second exhaust gas channel)
- 78: member
- 80: exhaust gas channel (first exhaust gas channel)
- 90: turbocharger
- 101: inner casing
- 102: outer casing
- 108: member

## Claims

1. A turbocharger (10;50) for compressing combustion air for an internal combustion engine and forcibly feeding high-density air into a combustion chamber of the internal combustion engine, comprising
an inner casing (21) and an outer casing (22) between which a space is formed that is configured to serve as a first exhaust gas channel (26) for guiding exhaust gas discharged from the internal combustion engine to an outer periphery side of a turbine nozzle (25);
a second exhaust gas channel (36) formed at an inner periphery side of the inner casing (21) for guiding exhaust gas that branches at an intermediate portion in the first exhaust gas channel (26) to an inner periphery side of the turbine nozzle (25); and
an exhaust gas pipe (38) communicating the intermediate portion of the first exhaust gas channel (26) and a gas inlet of the second exhaust gas channel (36), wherein the periphery of the inner casing (21) is provided with a flange (39) for connecting the exhaust gas pipe (38), and wherein the exhaust gas pipe (38) is connected to an on/off valve (41).

2. A turbocharger (60;90) for compressing combustion air for an internal combustion engine and forcibly feeding high-density air into a combustion chamber of the internal combustion engine, comprising
an inner casing (71;101) and an outer casing (72;102) between which a space is formed that is configured to serve as a first exhaust gas channel (80) for guiding exhaust gas discharged from the internal combustion engine to an inner periphery side of a turbine nozzle (25);
a second exhaust gas channel (76) formed at an outer periphery side of the inner casing (71;101) for guiding exhaust gas that branches at an intermediate portion in the first exhaust gas channel (80) to an outer periphery side of the turbine nozzle (25); and
an exhaust gas pipe (38) communicating the intermediate portion of the first exhaust gas channel (80) and a gas inlet of the second exhaust gas channel (76), wherein the periphery of the inner casing (71;101) is provided with a flange (39) for connecting the exhaust gas pipe (38), and wherein the exhaust gas pipe (38) is connected to an on/off valve (41).

3. The turbocharger (50) according to claim 1 or 2, wherein the inner casing (21) and the outer casing (22) are formed as a single body (51).

4. The turbocharger (10;50) according to claim 1 or 3, wherein a one-end inner periphery of the inner casing (21) located adjacent to the turbine nozzle (25) is a separate, hollow, cylindrical member (33).

5. The turbocharger (60;90) according to claim 2 or 3, wherein a one-end inner periphery of the inner casing (71;101) located adjacent to the turbine nozzle (25) is a separate, hollow, conical member (78;108).

6. The turbocharger (10:50;60;90) according to any one of claims 1 to 5, wherein the exhaust gas pipe (38) externally connects the first exhaust gas channel (26;80) and the second exhaust gas channel (36;76).

7. A method for operating a turbocharger (10:50;60;90) as defined in any one of claims 1 to 6 that compresses combustion air for an internal combustion engine and forcibly feeds high-density air into a combustion chamber of the internal combustion engine,
wherein, when the load of the internal combustion engine is low and the amount of exhaust gas is small, the on/off valve (41) is fully closed, and, when the load of the internal combustion engine is high and the amount of exhaust gas is large, the on/off valve (41) is fully opened.

## Patentansprüche

1. Ein Turbolader (10;50) zum Komprimieren von Verbrennungsluft für eine Verbrennungskraftmaschine und zum zwangsweisen Fördern von hochdichter Luft in eine Brennkammer der Verbrennungskraftmaschine, mit
einem Innengehäuse (21) und einem Außengehäuse (22), zwischen denen ein Raum ausgebildet ist, der ausgestaltet ist, um als ein erster Abgaskanal (26) zum Leiten von Abgas, das aus der Verbrennungskraftmaschine ausgetragen wird, zu einer Außenumfangsseite einer Turbinendüse (25) zu dienen,
einem zweiten Abgaskanal (36), der an einer Innenumfangsseite des Innengehäuses (21) ausgebildet ist, zum Leiten von Abgas, das an einem Zwischenabschnitt in dem ersten Abgaskanal (26) abgezweigt wird, zu einer Innerumfangsseite der Turbinendüse (25), und
einem Abgasrohr (38), das den Zwischenabschnitt des ersten Abgaskanals (26) mit einem Gaseinlass des zweiten Abgaskanal (36) verbindet, wobei der Umfang des Innengehäuses (21) mit einem Flansch (39) zum Verbinden des Abgasrohrs (38)versehen ist, und wobei das Abgasrohr (38) mit einem Ein/Aus-Ventil (41) verbunden ist.

2. Ein Turbolader (60;90) zum Komprimieren von Verbrennungsluft für eine Verbrennungskraftmaschine und zum zwangsweisen Fördern von hochdichter Luft in eine Brennkammer der Verbrennungskraftmaschine, mit
einem Innengehäuse (71;101) und einem Außengehäuse (72;102), zwischen denen ein Raum ausgebildet ist, der ausgestaltet ist, um als ein erster Abgaskanal (80) zum Leiten von Abgas, das von der Verbrennungskraftmaschine ausgetragen wird, zu einer Innenumfangsseite einer Turbinendüse (25) zu dienen,
einem zweiten Abgaskanal (76), der an einer Außenumfangsseite des Innengehäuses (71;101) ausgebildet ist, zum Leiten von Abgas, das an einem Zwischenabschnitt in dem ersten Abgaskanal (80) abgezweigt wird, zu einer Außenumfangsseite der Turbinendüse (25), und
einem Abgasrohr (38), das den Zwischenabschnitt des ersten Abgaskanals (80) mit einem Gaseinlass des zweiten Abgaskanals (76) verbindet, wobei der Umfang des Innengehäuses (71;101) mit einem Flansch (39) zum Verbinden des Abgasrohrs (38) versehen ist, und wobei das Abgasrohr (38) mit einem Ein/Aus-Ventil (41) verbunden ist.

3. Der Turbolader (50) gemäß Anspruch 1 oder 2, wobei das Innengehäuse (21) und das Außengehäuse (22) als ein einzelner Körper (51) ausgebildet sind.

4. Der Turbolader (10;50) gemäß Anspruch 1 oder 3, wobei ein Innenumfang eines Endes des Innengehäuses (21), das sich angrenzend an die Turbinendüse (25) befindet, ein separates, hohles, zylindrisches Element (33) ist.

5. Der Turbolader (60;90) gemäß Anspruch 2 oder 3, wobei ein Innenumfang eines Endes des Innengehäuses (71;101), das sich angrenzend an die Turbinendüse (25) befindet, ein separates, hohles, konisches Element (78;108) ist.

6. Der Turbolader (10:50;60;90) gemäß einem der Ansprüche 1 bis 5, wobei das Abgasrohr (38) den ersten Abgaskanal (26;80) und den zweiten Abgaskanal (36;76) extern verbindet.

7. Ein Verfahren zum Betreiben eines Turboladers (10:50;60;90) gemäß einem der Ansprüche 1 bis 6, der Verbrennungsluft für eine Verbrennungskraftmaschine komprimiert und hochdichte Luft in eine Verbrennungskammer der Verbrennungskraftmaschine zwangsweise fördert,
wobei, wenn die Last der Verbrennungskraftmaschine niedrig und die Menge an Abgas klein ist, das Ein/Aus-Ventil (41) vollständig geschlossen wird, und wenn die Last der Verbrennungskraftmaschine hoch und die Menge an Abgas groß ist, das Ein/Aus-Ventil (41) vollständig geöffnet wird.

## Revendications

1. Turbocompresseur (10; 50) pour comprimer de l'air de combustion pour un moteur à combustion interne et charger à force de l'air de grande masse volumique dans une chambre de combustion du moteur à combustion interne, comprenant
une enveloppe (21) intérieure et une enveloppe (22) extérieure, entre lesquelles est formé un espace configuré pour servir de premier canal (26) pour des gaz d'échappement, pour conduire des gaz d'échappement évacués du moteur à combustion interne à un côté extérieur de la périphérie d'une tuyère (25) de turbine ;
un deuxième canal (36) pour des gaz d'échappement formé à un côté intérieur de la périphérie de l'enveloppe (21) intérieure, pour conduire des gaz d'échappement, qui bifurque en une partie intermédiaire du premier canal (26) pour des gaz d'échappement vers un côté intérieur de la périphérie de la tuyère (25) de turbine et
un conduit (38) pour des gaz d'échappement mettant la partie intermédiaire du premier canal (26) pour des gaz d'échappement en communication avec une entrée de gaz du deuxième canal (36) pour des gaz d'échappement, la périphérie de l'enveloppe (21) intérieure étant pourvue d'une bride (39) pour relier le conduit (38) pour des gaz d'échappement et le conduit (38) pour des gaz d'échappement est relié à un robinet (41) de marche/arrêt.

2. Turbocompresseur (60; 90) pour comprimer de l'air de combustion pour un moteur à combustion interne et charger à force de l'air de grande masse volumique dans une chambre de combustion du moteur à combustion interne, comprenant
une enveloppe (71; 101) intérieure et une enveloppe (72; 102) extérieure, entre lesquelles est formé un espace configuré pour servir de premier canal (80) pour des gaz d'échappement, pour conduire des gaz d'échappement évacués du moteur à combustion interne à un côté intérieur de la périphérie d'une tuyère (25) de turbine ;
un deuxième canal (76) pour des gaz d'échappement formé à un côté extérieur de la périphérie de l'enveloppe (71; 101) intérieure, pour conduire des gaz d'échappement, qui bifurque en une partie intermédiaire du premier canal (80) pour des gaz d'échappement vers un côté extérieur de la périphérie de la tuyère (25) de turbine et
un conduit (38) pour des gaz d'échappement mettant la partie intermédiaire du premier canal (80) pour des gaz d'échappement en communication avec une entrée de gaz du deuxième canal (76) pour des gaz d'échappement, la périphérie de l'enveloppe (71; 101) intérieure étant pourvue d'une bride (39) pour relier le conduit (38) pour des gaz d'échappement et le conduit (38) pour des gaz d'échappement est relié à un robinet (41) de marche/arrêt.

3. Turbocompresseur (50) suivant la revendication 1 ou 2, dans lequel l'enveloppe (21) intérieure et l'enveloppe (22) extérieure sont sous la forme d'un corps (51) unique.

4. Turbocompresseur (10; 50) suivant la revendication 1 ou 3, dans lequel une périphérie intérieure à une extrémité de l'enveloppe (21) intérieure placée au voisinage de la tuyère (25) de turbine est un élément (33) cylindrique creux distinct.

5. Turbocompresseur (60; 90) suivant la revendication 2 ou 3, dans lequel une périphérie intérieure à une extrémité de l'enveloppe (71; 101) intérieure placée près de la tuyère (25) de turbine est un élément (78; 108) conique, creux, distinct.

6. Turbocompresseur (10; 50; 60; 90) suivant l'une quelconque des revendications 1 à 5, dans lequel le conduit (38) pour des gaz d'échappement met extérieurement le premier canal (26; 80) pour des gaz d'échappement en communication avec le deuxième canal (36; 76) pour des gaz d'échappement.

7. Procédé pour faire fonctionner un turbocompresseur (10; 50; 60; 90) tel que défini à l'une quelconque des revendications 1 à 6, qui comprime de l'air de combustion pour un moteur à combustion interne et charge à force de l'air de grande masse volumique dans une chambre de combustion du moteur à combustion interne,
dans lequel, lorsque la charge du moteur à combustion interne est petite et lorsque la quantité des gaz d'échappement est petite, le robinet (41) de marche/arrêt est fermé complètement et, lorsque la charge du moteur à combustion interne est grande et lorsque la quantité des gaz d'échappement est grande, le robinet (41) de marche/arrêt est ouvert complètement.
